# EUROPÄISCHE PATENTSCHRIFT

(11) **EP 0 836 069 B1**
(45) Veröffentlichungstag und Bekanntmachung des Hinweises auf die Patenterteilung: **16.05.2001**
(21) Anmeldenummer: 97202141.4
(22) Anmeldetag: 11.07.1997
(51) Int. Cl.: F41G 3/26

(54) **Gurtsystem für Gefechtszwecke**
Belt system for struggle aim
Système de ceinture pour un but de combat

(30) Priorität: 11.10.1996 US 730682
(43) Veröffentlichungstag der Anmeldung: 15.04.1998
(73) Patentinhaber: OERLIKON CONTRAVES AG, 8050 Zürich (CH)
(72) Erfinder: Gerber, Peter, 8965 Berikon (CH); Staub, Karl, 8126 Zumikon (CH)
(74) Vertreter: Hotz, Klaus, Dipl.-El.-Ing./ETH

(56) Entgegenhaltungen:
- EP-A- 0 504 690
- DE-A- 4 003 960
- FR-A- 2 659 136
- US-A- 4 545 583
- US-A- 4 899 039
- US-A- 5 426 295
- US-A- 5 447 436
- US-A- 5 479 408

## Beschreibung

Die Erfindung betrifft ein Gurtsystem für Gefechtszwecke nach Anspruch **1**, eine Verwendung des Gurtsystems nach Anspruch **9** und ein Verfahren zum Betrieb des Gurtsystems nach Anspruch **11**.

Ein Gurtsystem oder ein ähnliches System dieser Art kann beispielsweise zur Gefechtssimulation und/oder in sogenannten Freund/Feind-Erkennungssystemen verwendet werden. Es besteht üblicherweise aus einer Vielzahl von Sensoren, wie zum Beispiel Lichtsensoren zur Detektion von Laserstrahlung. Einige Bestandteile des Gurtsystems können beispielsweise auch auf einer Waffe montiert sein oder in einer Tasche oder auf einem Kleidungsstück mitgeführt werden.

Zudem sind aus der ***DE-OS 22 51 295*** und der ***EP-A 0 187 086*** Freund/Feind-Erkennungssysteme in Form von Einrichtungen bekannt, bei denen ein Abfrager codierte Lichtsignale aussendet und ein Abgefragter mit codierten Funksignalen antwortet. Solche Systeme sind kompliziert und damit störanfällig und erfordern einen erheblichen Aufwand.

In bestehenden Ausführungen von Gurtsystemen werden die einzelnen Komponenten des Systems anderseits häufig durch Drahtleitungen miteinander verbunden. Drähte sind jedoch problembehaftet, insbesondere wenn das Gurtsystem aus mehreren Teilen besteht, zum Beispiel aus einem auf dem Körper sowie dem Helm getragenem Teilsystem.

Ein leicht verbessertes Gurtsystem offenbart die ***DE-40 03 960*.** Es weist ein Körpergurtzeug, das mehrere verbundenen Teilgurten umfasst, und ein Helmgurtzeug auf, das vom Körpergurtzeug getrennt ist. Sowohl das Körpergurtzeug wie auch das Helmgurtzeug sind mit kabelverbundenen Detektoren bestückt. Vorgesehen sind im weiteren eine Batterie und ein Auswertgerät mit Trefferanzeige. Die Signalverbindung zwischen dem Körpergurtzeug einerseits und dem Helmgurtzeug anderseits erfolgt mittels einer drahtlosen Funkstrecke. Das Körpergurtzeug dieses Gurtsystem ist sehr unpraktisch, sowohl zum Anbringen am Träger wie auch im Gebrauch, da die verbundenen Teilgurten den Träger bei der Bewegung hindern. Wenn ein Gurtteil des Körpergurtzeuges reisst oder sich öffnet, so hat dies im Allgemeinen zur Folge, dass das gesamte Körpergurtzeug ausfällt. Defekte Einzelteile führen dazu, dass das Körpergurtzeug mindestens zeitweilig, das heisst bis zur Reparatur oder zum Ersatz des defekten Bestandteiles nicht verwendet werden kann. Da Reparaturen als umständlich empfunden werden, wird ein Körpergurtzeug mit einem defekten Bauteil nicht repariert sondern entsorgt, wobei eine beträchtliche Menge an sich noch funktionstüchtiger Einzelteile verloren gehen.

Die Übertragung von Signalen über Ultraschall und Funk zwischen einer externen bzw. ortsfesten Zentrale und mobilen Stationen, die an einem Träger befestigt sind, ist seit längerer Zeit bekannt. Ein solches System ist beispielsweise in der ***US-5,479,408*** beschrieben. Hierbei handelt es sich aber lediglich um eine Pagereinrichtung, mit welcher beipielsweise kurze Botschaften zwischen der Zentrale und den mobilen Stationen ausgetauscht werden, wobei aber jede Station nur eine Einheit umfasst, so dass ein Austausch von Botschaften innerhalb einer Station weder notwendig noch durchführbar ist.

Für gefechtsmässige Anwendungen sind schon induktive Kommunikationssysteme vorgeschlagen worden, die allerdings mit hohen Kosten behaftet sind. Sie setzten den Soldaten auch der Gefahr der Entdeckung durch die von feindlichen Funkempfängem aufgefangene Strahlung des Systems aus.

Zusammenfassend muss festgestellt werden, dass kein System bekannt ist, welches den Erfordernissen, die an Freund/Feind-Erkennungssysteme und Gefechts-Simulationssysteme gestellt werden, vollauf genügt.

Es ist daher **Aufgabe** der Erfindung,
- ein Gurtsystem für Gefechtszwecke,
- eine Verwendung dieses Gurtsystems und
- ein Verfahren zum Betrieb des Gurtsystems
aufzuzeigen, wobei die Nachteile des Standes der Technik vermieden werden, indem eine zuverlässige, sichere und einfache Datenübermittlung zwischen den einzelnen Komponenten des Gurtsystems gewährleistet sein müssen.

Die **Lösung** dieser Aufgabe erfolgt
- für das Gurtsystem durch die Merkmale des Anspruchs **1,**
- für die Verwendung des Gurtsystems durch die Merkmale des Anspruchs **9**, und
- für das Verfahren zum Betrieb des Gurtsystems durch die Merkmale des Anspruchs **11**.

Bevorzugte Weiterbildungen des erfindungsgemässen Gurtsystems, seiner Verwendung und des Verfahrens zu seinem Betrieb sind durch die abhängigen Ansprüche **2** bis **8** bzw. **10** bzw. **12** bis **15** definiert.

Das neue Gurtsystem zeichnet sich durch die Besonderheit aus, dass es eine Vielzahl miteinander Daten austauschender elektrischer Komponenten umfasst, wobei alle Komponenten ein Ultraschall-Übertragungssystem mit Sender und Empfänger zum Senden und Empfangen von Datensignalen und mindestens eine Komponente, nämlich eine zentrale, jedoch gurtsystem-inteme Kontrolleinheit, eine Funkverbindung mit einer externen Führungsstelle besitzt, um deren Datensignale zu detektieren und um Datensignale mit der Führungsstelle auszutauschen.

Das Gurtsystem, das im Allgemeinen an einem Träger angebracht wird, kann zusammen mit mindestens einem weiteren, mit ihm kompatiblen, an einem weiteren Träger angebrachten Gurtsystem als Gefechts-Simulationssystem verwendet werden.

Der interne Betrieb eines Gurtsystems für Gefechtszwecke manifestiert sich durch die Emission eines Ultraschall- Datensignals aus wenigstens einer ersten dieser besagten Komponenten und dem Empfang des Ultraschall-Datensignals durch mindestens eine dieser Komponenten. Wie schon erwähnt ist eine Komponente, nämlich die zentrale Kontrolleinheit, zudem so ausgebildet, dass sie über eine Funkverbindung mit einer externen Führungszentrale verkehren kann. Zusätzlich können auch die weiteren Komponenten Sender und Empfänger für eine Funkverbindung aufweisen.

Ultraschallsignale, d. h. Schallsignale mit einer Mittenfrequenz höher als etwa 20 kHz, sind aus etwas grösserer Entfernung schwer zu detektieren, sind also nicht der Detektion durch Feinde ausgesetzt. Ausserdem sind Ultraschall-Sender und -Sensoren/ Empfänger robuste und einfache Bauteile, die die Kosten des Gurtsystems reduzieren.

Weitere Vorteile und Anwendungen der vorliegenden Erfindung ergeben sich aus der nun folgenden Beschreibung anhand der folgenden Figuren. Dabei zeigen:
**Fig. 1** Eine Ausführungsform eines gesamten erfindungsgemässen Gurtsystems
**Fig. 2** eine Ausführungsform eines Helmgurts in Seitenansicht;
**Fig. 3** eine Ausführungsform des Helmgurts in Draufsicht,
**Fig. 4** eine Ausführungsform eines Armgurts in Seitenansicht,
**Fig. 5** eine Ausführungsform des Armgurts in Draufsicht;
**Fig. 6** eine Ausführungsform einer zentralen Kontrolleinheit in Vorderansicht;
**Fig. 7** eine Ausführungsform der zentralen Kontrolleinheit in Seitenansicht;
**Fig. 8** ein Blockschema einer steuernden Einheit;
**Fig. 9** ein weiteres Blockschema einer gesteuerten Einheit;
**Fig. 10** ein beispielhaftes Datenpaket, welches zwischen den Komponenten des Gurtsystems ausgetauscht wird.
**Fig. 11** ein vollständiges Gefechts-Simulations oder -Kontrollsystem.

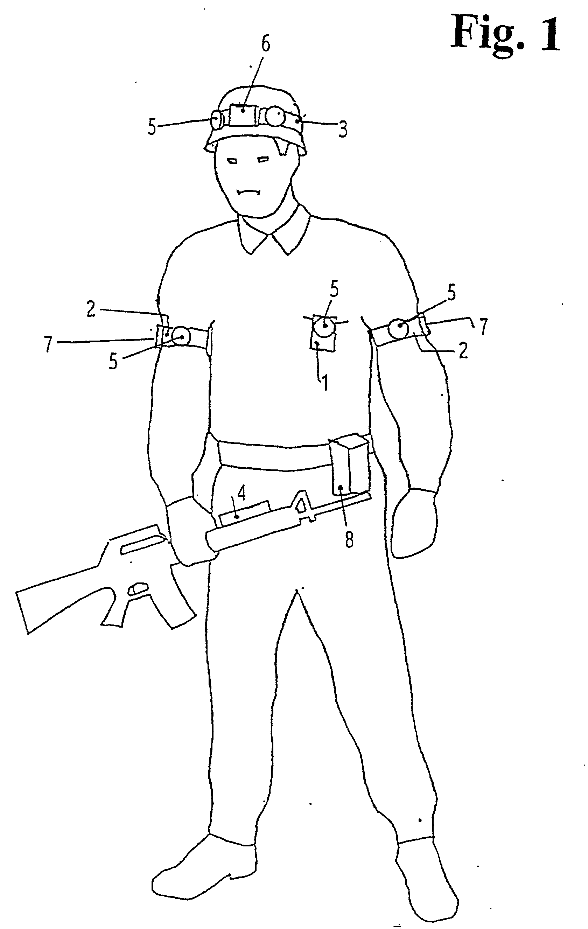

Die Basisanordnung einer bevorzugten Ausführungsform eines Gurtsystems nach der vorliegenden Erfindung ist in **Fig. 1** dargestellt.

Die Hauptbestandteile des Gurtsystems sind eine zentrale Kontroll- und Steuereinheit **1,** im weiteren kurz als zentrale Kontrolleinheit **1** bezeichnet, zwei Körpergurten **2,** welche als Armgurten **2** ausgebildet sind, ein Helmgurt **3** und eine Laservorrichtung **4.** Die zentrale Kontrolleinheit **1,** die Armgurten **2** und der Helmgurt **3** sind jeweils mit einem oder mehreren Laser-bzw. Lichtdetektoren **5** ausgerüstet, welche in ihrer Empfindlichkeit auf die Wellenlänge des von der Laservorrichtung **4** abgestrahlten Lichts sensibilisiert sind. In der vorliegenden Ausführungsform ist jeder Armgurt **2** mit zwei auf einander gegenüberliegenden Seiten des Arms angeordneten Laser- bzw. Lichtdetektoren **5**, im folgenden kurz als Lichtdetektoren **5** bezeichnet, ausgerüstet, der Helmgurt **3** trägt vier Lichtdetektoren **5** mit einem Bedeckungsbereich von jeweils etwa 90 Grad. Weil jedes Teil des Gurtsystems individuell an die Extremitäten des Körpers wie Arme, Beine, Kopf bzw. Helm angelegt werden kann, nicht aber um den Rumpf, das heisst nicht um Oberkörper und Brustkasten, ist das An- und Ablegen des Gurtsystems auch dann leicht möglich, wenn der Soldat andere Ausrüstungsgegenstände mit sich führt, wie zum Beispiel einen Rucksack.

Die vorliegende Erfindung kann als Freund/Feind-Erkennungssystem sowie als Gefechts-Simulationssystem verwendet werden.

Bei Verwendung als Freund/Feind-Erkennungssystem richtet ein identifizierender Soldat seine Waffe auf ein potentielles Ziel und setzt die Laservorrichtung **4** in Betrieb, welche ein Lasersignal bzw. einen modulierten Laserstrahl aussendet. Das Ziel, beispielsweise ein zu identifizierender Soldat, detektiert das Lasersignal und sendet eine Erwiderung, welche seine Identität beweist. Diese Erwiderung wird vom Gurtsystem des identifizierenden Soldaten oder dessen Laservorrichtung **4** empfangen und zeigt diesem das Ziel als freundliches Objekt bzw. der eigenen Partei zugehörig an. Im Falle des Nichtvorhandenseins einer passenden Erwiderung identifiziert das Gurtsystem des Identifizierenden Soldaten beziehungsweise dessen Laservorrichtung **4** das Ziel als feindliches oder neutrales Objekt.

Das vorliegende Gurtsystem kann auch als Gefechts-Simulationssystem verwendet werden. In diesem Fall richtet ein das System anwendender Soldat ebenfalls seine Waffe auf ein Ziel, d. h. einen zweiten ein Gurtsystem tragenden Soldaten und löst die Laservorrichtung **4** aus. Wenn ein oder mehrere Lichtdetektoren **5** des m Gurtsystem des zweiten Soldaten getroffen werden, erhält der erste Soldat eine Trefferanzeige.

Unabhängig vom eigentlichen Zweck kann die Laservorrichtung **4** auch von einer mit dieser Anwendung vertrauten Person als Zielhilfe benutzt werden.

Das gesamte Gurtsystem aus **Fig. 1** beinhaltet mehrere Bestandteile, namentlich
- die zentrale Kontrolleinheit **1** mit ihrem Lichtdetektor **5**,
- den Helmgurt **3**, welcher vier Lichtdetektoren **5** sowie einen Helm-Kontrollschaltkreis **6** beinhaltet, wobei der Helm-Kontrollschaltkreis **6** auch als Kontroll- und Steuereinheit **6** bezeichnet wird;
- zwei als Armgurte **2** ausgebildete Körpergurte, welche jeweils zwei Lichtdetektoren **5** und einen Arm-Kontrollschaltkreis **7** beinhalten, wobei die Arm-Kontrollschaltkreise **7** auch als Kontroll- und Steuereinheit **7** bezeichnet werden;
- die Laservorrichtung **4**, welche vom Soldaten nicht auf dem Körper sondern beispielsweise an der persönlichen Waffe getragen wird, welche aber in dieser Anordnung dennoch als einer der Bestandteile des gesamten Gurtsystems betrachtet wird, da diese Waffe vom Soldaten mitgeführt wird und mit den übrigen Bestandteilen des Gurtsystems in Wechselwirkung steht,
- zusätzliche Bestandteile, wie zum Beispiel ein GPS-Modul **8**, Ohrhörer, nicht dargestellt, u.s.w.

In den folgenden Figuren wird zunächst der mechanische Aufbau einiger dieser Bestandteile des gesamten Gurtsystems erörtert und anschliessend das zum Datenaustausch zwischen diesen Bauteilen des Gurtsystems angewandte Verfahren erläutert.

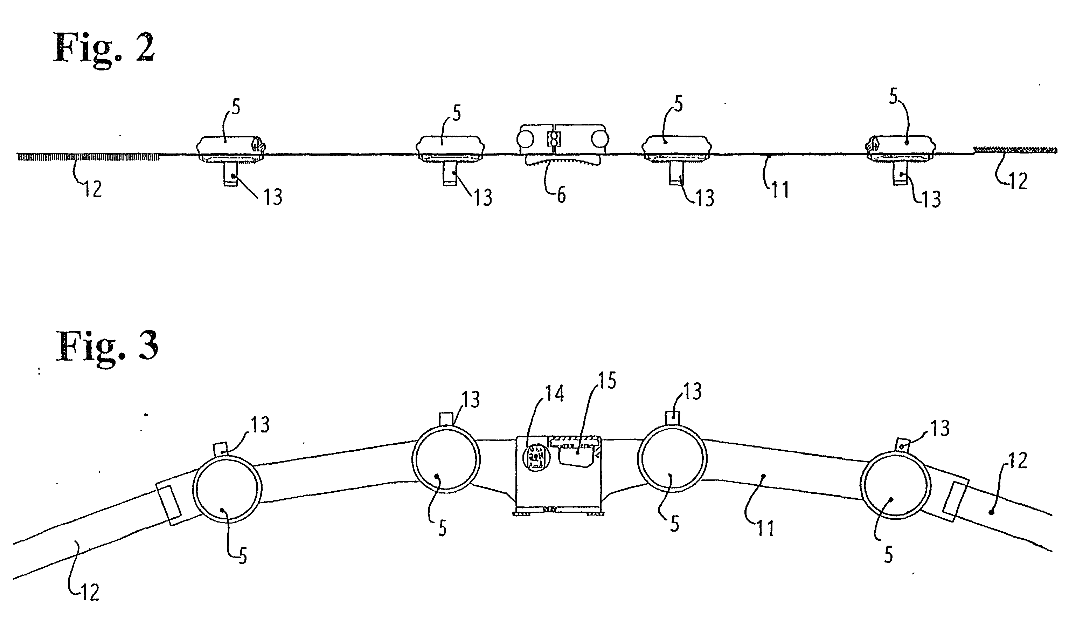

Die **Fig. 2** und **3** zeigen ein Ausführungsbeispiel des Helmgurts **3**. Er umfasst ein erstes Gurtteil **11** mit ersten Velcro-Verschlüssen **12** an dessen Enden. Vier Lichtdetektoren **5** zur Detektion von Infrarotstrahlung sind entlang des ersten Gurtteils **11** angeordnet Ein Keil **13** hinter jedem Lichtdetektor **5** stellt eine vertikale Ausrichtung von dessen äusserer Oberfläche gegenüber der gekrümmten Fläche des Heims sicher. Der in der Mitte des Gurtteils **11** angeschlossene Helm-Kontrollschaltkreis **6** umfasst einen Display **14** und eine Batterie **15.**

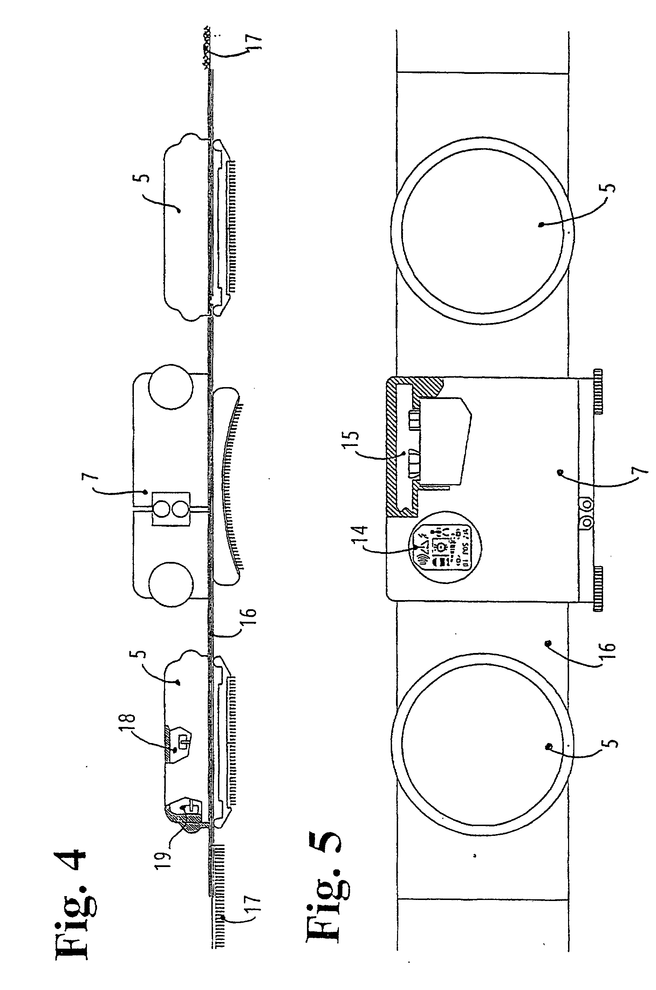

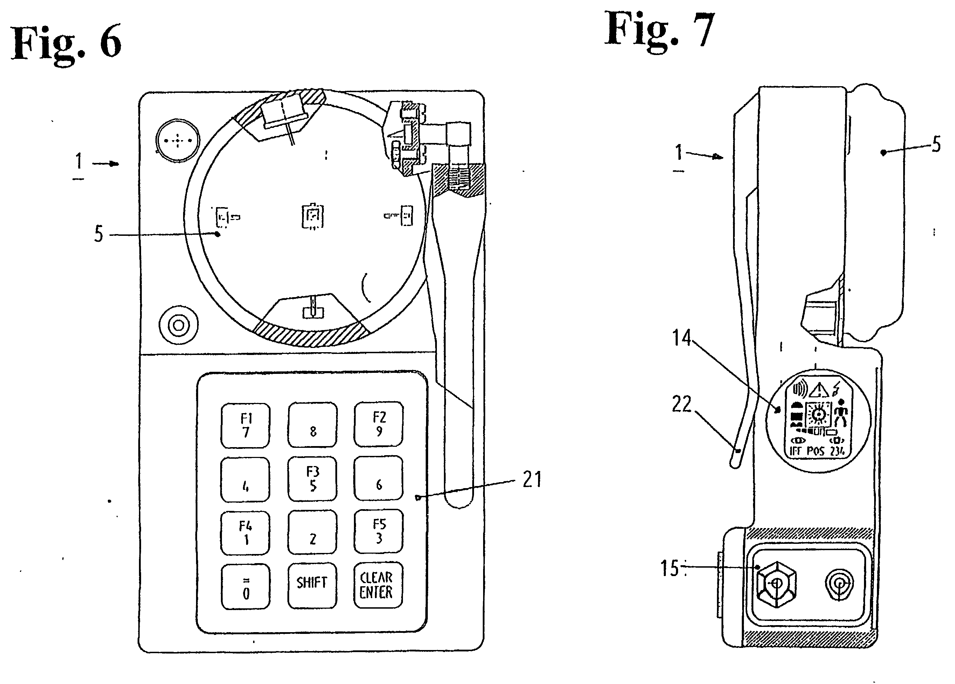

Die **Fig. 4** und **5** zeigen ein Ausführungsbeispiel des Armgurts **2**. Er beinhaltet ein zweites Gurtteil **16** mit einem zweiten Velcro-Verschluss **17**. Das zweite Gurtteil **16** trägt zwei Lichtdetektoren **5** und den Arm-Kontrollschaltkreis **7.** Jeder Lichtdetektor **5** beinhaltet eine zentral angeordnete erste lichtempfindliche Diode **18** und seitlich angeordnete zweite lichtempfindliche Dioden **19.** Der Arm-Kontrollschaltkreis **7** ist in gleicher Weise aufgebaut wie der Helm-Kontrollschaltkreis **6** und enthält ebenfalls einen Display **14** und eine Batterie **15.**

Die **Fig. 6** und **7** zeigen ein Ausführungsbeispiel der zentralen Kontrolleinheit **1.** Die Kontrolleinheit **1** ist ebenfalls mit einem Lichtdetektor **5** ausgerüstet. Sie beinhaltet eine Tastatur **21,** ein Display **14** und eine Batterie **15**. Mit einem Klemmbügel **22** kann die zentrale Kontrolleinheit an einer Brusttasche, einem Gürtel oder einem sonstigen Ausrüstungsgegenstand befestigt werden.

Der Datenaustausch zwischen den einzelnen Komponenten des Gurtsystems, das heisst der zentralen Kontrolleinheit **1**, dem Heimgurt **3**, den Armgurten 2 und ggfs. dem Helm-Kontrollschaltkreis **7** und den Arm-Kontrollschaltkreisen **6**, geschieht über Ultraschallsignale. Zu diesem Zweck handelt eine der Komponenten, nämlich die Kontrolleinheit **1**, als steuernde Einheit. Die anderen Komponenten, also gemäss **Fig. 1** der Helmgurt **3** und die Armgurten **2**, handeln als gesteuerte Einheiten.

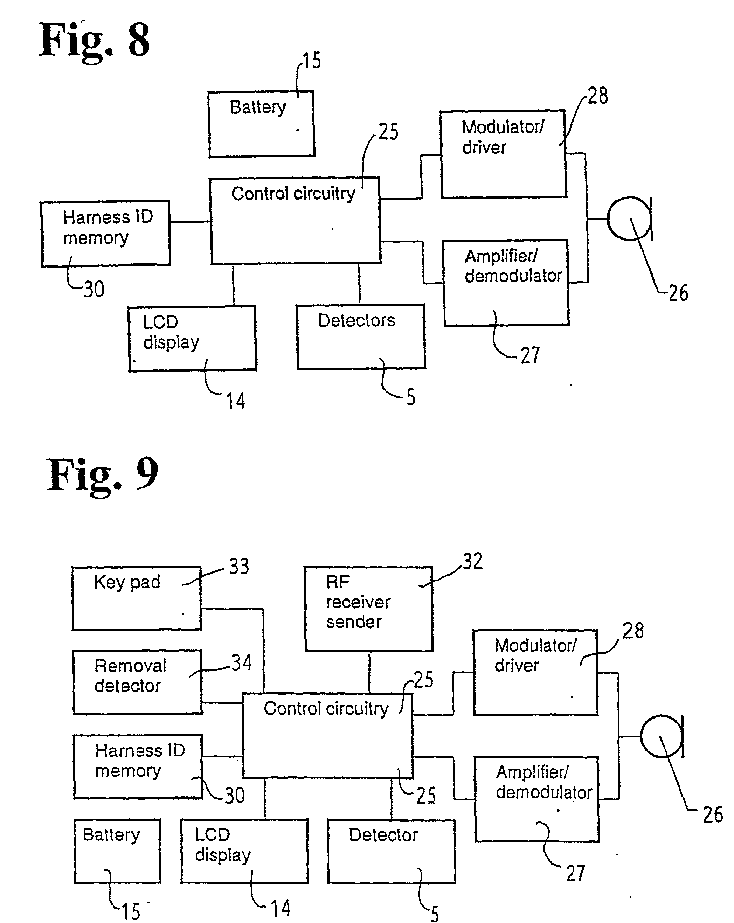

Fig. 8 zeigt ein Blockschema einer gesteuerten Einheit, in diesem Fall des Helmgurts **3** oder eines der Armgurten 2. Das Blockdiagramm anderer gesteuerter Einheiten, wie z. B. das des GPS-Moduls **8**, kann andere oder zusätzliche Elemente enthalten.

Die gesteuerte Einheit wird durch einen Kontrollschaltkreis **25** gesteuert, die z. B. einen Mikroprozessor, RAM und ROM enthält, so wie es dem entsprechenden Fachmann geläufig ist. Der Kontrollschaltkreis **25** überwacht die Signale von den Lichtdetektoren **5** und zeigt Daten auf dem LCD-Display **14** an. Alle Elemente der gesteuerten Einheit werde von der Batterie **15** mit Strom versorgt.

Ein erster Ultraschall-Wandler **26** ist für die Datenübertragung vorgesehen. Der erste Ultraschall-Wandler **26** ist z. B. ein piezoelektrisches Element, das sowohl als Sender als auch als Empfänger von Ultraschall-Wellen betrieben werden kann. In der vorliegenden Ausführungsform arbeitet der Ultraschall-Wandler **26** mit einer Frequenz von 40 kHz. Vom ersten Ultraschall-Wandler **26** kommende Signale werden in einem Verstärker/Demodulator **27** verarbeitet und dem Kontrollschaltkreis **25** zugeführt. Signale, welche durch die gesteuerte Einheit ausgesendet werden, werden über einen Modulator/Treiber **28** auf den Transducer **29** geführt.
Gesendete und empfangene Signale können auf alle einem Fachmann geläufige Arten enkodiert werden, genannt seien Amplituden-, Frequenz- oder Puls-Modulation.

Wie im folgenden beschrieben, beinhaltet jede gesteuerte Einheit auch eine Speichereinheit **30,** um eine ID zu speichern. Die ID ist ein für jedes Gurtsystem individueller Identifizierungscode. Die Speichereinheit **30** für die ID des Gurtsystems kann ein Teil des RAM des Kontrollschaltkreises **25** sein.

**Fig. 9** zeigt ein Blockdiagramm der steuernden Einheit, also der Kontrolleinheit 1. Dieses Blockdiagramm beinhaltet ebenfalls einen Kontrollschaltkreis **25,** einen überwachenden Lichtdetektor **5**, ein LCD-Display **14**, eine Batterie **15**, einen ersten Ultraschall-Wandler **26** mit einem Verstärker/Demodulator **27** und einem Modulator/Verstärker **28** sowie eine Speichereinheit **30** für die ID des Gurtsystems, welche sich sowohl in einem RAM als auch in einem ROM befinden kann. Zusätzlich zum Genannten sind die folgenden Elemente enthalten:
- ein Funk-Sender/Empfänger **32** zur Kommunikation mit der Aussenwelt;
- eine zweite Tastatur **33** zur Dateneingabe und zur Kontrolle der Funktion des Gurtsystems;
- ein Kontaktdetektor **34,** um die Entfernung der Kontrolleinheit **1** von ihrem Träger zu erfassen; dieser Kontaktdetektor kann z. B. mit Sensoren ausgerüstet sein, die Feuchtigkeit, Temperatur, Puls, menschliche Stimmen oder andere Parameter erfassen, die auf die Nähe des Körpers seines Trägers schliessen lassen, oder aber mechanische Detektoren enthalten, welche das Öffnen der zur Befestigung an ihrem Träger verwendeten mechanischen Vorrichtungen anzeigen.

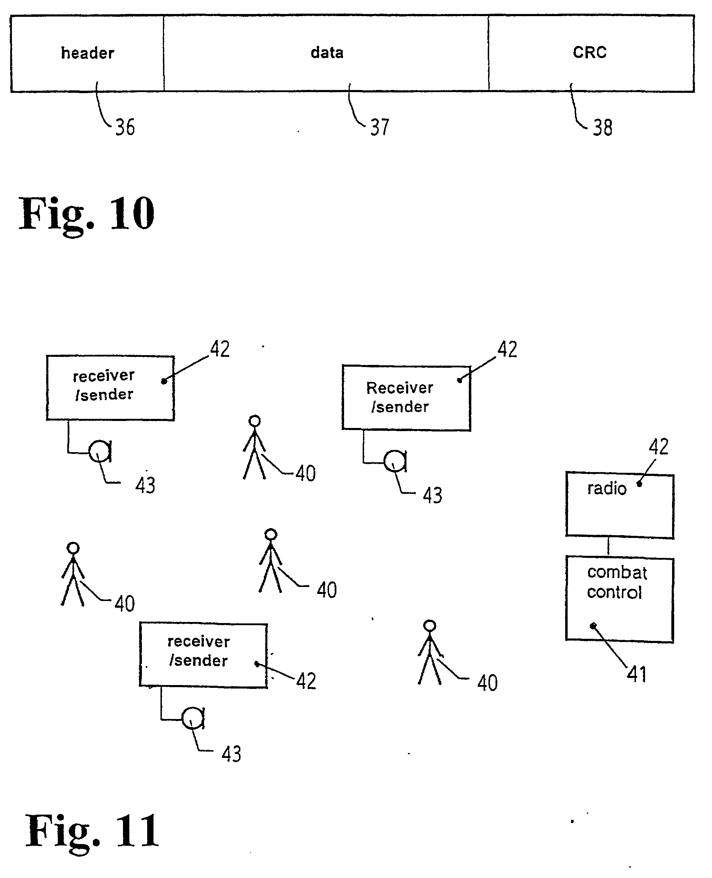

Der Datenaustausch zwischen den einzelnen Komponenten, das heisst insbesondere zwischen der Kontrolleinheit **1**, dem Helmgurt **3** und den Körpergurten **2**, des Gurtsystems kann z. B. durch den Gebrauch von Datenpaketen wie dem in **Fig. 10** gezeigten durchgeführt werden. Jedes Datenpaket beginnt mit einem Datenkopf **36**, gefolgt von einem Datenblock **37** und einer geeigneten Kontrollsumme 38.

Bei normalem Datenaustausch werden Standard-Botschaften mit einem Datenkopf **36** gesendet, der die Gurtsystem-ID des vorliegenden Gurtsystems enthält. Nach Empfang der Botschaft vergleicht jede Komponente diese ID mit der in der Speichereinheit **30** des Gurtsystems abgelegten ID. Wenn beide Identifizierungscodes zueinander passen, wird der nachfolgende Datenblock **37** analysiert. Der Datenblock **37** enthält z. B. Informationen über den Zustand des(r) Lichtdetektors(ren) **5,** auf dem LCD-Display anzuzeigenden Meldungen **14** usw.

Solche Standard-Botschaften können von jeder Komponenten des Gurtsystems gesendet werden. Diese werden von allen anderen Komponenten empfangen und analysiert Zusätzlich kann die Kontrolleinheit **1** bzw. ihr Kontrollschaltkreis **25** auch Kontroil-Botschaften aussenden. Eine dieser Kontroll-Botschaften ist die Initialisierungs-Botschaft.

Eine Initialisierungs-Botschaft wird von der Kontrolleinheit **1** üblicherweise ausgesendet, nachdem der Träger das Gurtsystem angelegt, einen in der Speichereinheit **30** des Gurtsystems abzulegenden Gurtsystem-Identifizierungscode eingegeben sowie eine Initialisierungs-Taste auf der Tastatur **33** betätigt hat. Die Initialisierungs-Botschaft enthält einen speziellen Initialisierungscode im Datenkopf **36.** Wenn eine gesteuerte Einheit, also der Helmgurt **3** oder einer der Körpergurten **2,** eine Botschaft mit diesem Initialisierungscode erhält, durchläuft sie den Datenblock **37**, welcher die ID des Gurtsystems der Kontrolleinheit **1** enthält. Diese Gurtsystem-ID wird in die Gurtsystem-ID der empfangenden gesteuerten Einheit, Helmgurt **3** oder Körpergurt **2,** kopiert. Die Initialisierungs-Botschaft wird also dazu verwendet, die Gurtsystem-ID aller gesteuerten Einheiten, das heisst der innerhalb der Reichweite des ersten Unltraschall-Wandlers **26** befindlichen Einheiten, zu setzen. Nach dem Anlegen des Gurtsystems muss deshalb der Soldat einen Platz aufsuchen, der hinreichend weit von anderen Trägern weiterer Gurtsysteme entfernt ist und die Initialisierungstaste auf seiner Kontrolleinheit **1** bzw. seinem Kontrollschaltkreis **25** betätigen. Hierdurch werden alle Komponenten seines eigenen Gurtsystems initialisiert.

Eine zweite von der Kontrolleinheit **1** ausgesendete Kontroll-Botschaft ist die Synchronisations-Botschaft. Synchronisations-Botschaften werden in regelmässigen Zeitintervallen ausgesendet. Jede Synchronisations-Botschaft enthält einen speziellen Synchronisationscode in ihrem Datenkopf **36** sowie den Gurtsystem-Identifizierungscode der Kontrolleinheit **1** in ihrem Datenblock. Jede gesteuerte Einheit, **2** bzw. **3**, kontrolliert, ob wenigstens eine Synchronisations-Botschaft mit dem Gurtsystem-ldentifizierungscode innerhalb einer gegebenen Zeitspanne empfangen wurde. Wenn nicht, nimmt diese Einheit an, von ihrer Kontrolleinheit 1 entfernt worden zu sein. Sie beginnt dann, nach einer beliebigen Synchronisations-Botschaft zu suchen und holt im Falle des Auffindens einer solchen Botschaft deren Gurtsystem-lentifizierungscode aus deren Datenblock **37** und setzt seine eignen Gurtsystem-ID-Speichereinheit auf diesen neuen Gurtsystem-Identifizierungscode. Dies ermöglicht den Austausch von Gurtsystem-Komponenten zwischen verschiedenen Soldaten. Wenn eine Gurtsystem-Komponente von einem Soldaten zu einem anderen übergeben wird, so wird diese ihren Identifizierungscode automatisch mit demjenigen der Gurtsystem-Komponenten in seiner unmittelbaren Nachbarschaft abgleichen.

Normale Standard-Botschaften werden für den, Datenaustausch zwischen den Komponenten des Gurtsystems verwendet. Sie transportieren z. B. die folgenden Informationen:
- von einem der Detektoren **5** empfangene Laserlicht-Signale;
- der Zustand der Batterien der einzelnen Komponenten;
- auf dem LCD-Display **14** jeder Komponente darzustellende Informationen, wobei in einer bevorzugten Ausführungsform jedes Display **14** jeder Komponente dieselbe Information zeigt;
- Ortsinformation von der GPS-Einheit **8**;
- Freund/Feind-Erkennungs- oder Simulationsstatus-Anzeige von der Laservorrichtung **4.**
Es können aber auch beliebige andere Informationen ausgetauscht werden.

In der vorliegenden Ausführungsform nach **Fig. 1** übt die Kontrolleinheit **1** die Steuerfunktion aus, während alle übrigen Komponenten gesteuert werden. Es ist jedoch möglich, jede beliebige der anderen Komponenten zur Kontrolleinheit zu machen. Ebenso kann die Anzahl der Komponenten gegenüber dem vorliegenden Beispiel grösser oder kleiner sein.

**Fig. 11** zeigt ein vollständiges Gefechts- oder Simulations-System, wie es zur Beaufsichtigung oder Führung einer Vielzahl von Soldaten **40** aus einer Führungszentrale **41** verwendet wird. Die Führungszentrale **41** ist mit einem zweiten Funk-Sender/Empfänger **42** ausgerüstet, wodurch Datenverbindungen zu den Funk-Sender/Empfängern **32** der Kontrolleinheiten **1** bzw. Kontrollschaltkreisen **25**) der Gurtsysteme der Soldaten gewährleistet ist. Diese Verbindung wird von den Kontrolleinheiten verwendet, um Zustandsinformationen von jedem Soldaten zu übermitteln (wie z. B. seine Position, Notrufe, ermittelte Treffer usw.). Die externe Führungszentrale kann diese Verbindung zur Übermittlung von Befehlen wie "Rückzug" oder "Angriff" verwenden.

In Ergänzung zum oben Beschriebenen kann eine Vielzahl von festen oder beweglichen, zum Beispiel auf Fahrzeugen montierten, zweiten Funk-Sendern/Empfängern **42** vorhanden sein, die mit der externen Führungszentrale **41** über Funk oder Kabel verbunden sind. Jeder Empfänger/Sender **42** beinhaltet einen oder mehrere zweite Ultraschallwandler **43**, welche zur Kommunikation mit den ersten Ultraschall-Wandlern **26** der Gurtsysteme verwendet werden können. Zweite Empfänger/Sender **42** können z. B. die Anwesenheit von Soldaten in einem gegebenen Gebiet detektieren (z. B. in einem Raum) und hierbei weitere Information für die Führungszentrale gewährleisten. Sie können auch dazu verwendet werden, Daten von der Führungszentrale **41** zu allen Soldaten des gegebenen Gebiets zu übermitteln. Die zweiten Funk-Empfänger/Sender **42** können auch mit automatischen Türöffnern, Raumbeleuchtung, Videoüberwachungseinrichtungen usw. verbunden werden. Für solche Funktionen braucht nicht notwendigerweise eine Verbindung zur Führungszentrale **41** zu bestehen.
Die vorliegende Erfindung kann auch mit beliebigen existierenden Gefechts-Simulationssystemen und Kommunikationssystemen kombiniert werden.

Vorgängig wurde eine bevorzugte Ausführungsform der Erfindung gezeigt und beschrieben. Es wird hingegen ausdrücklich betont, dass diese Erfindung sich nicht hierauf beschränkt und im Rahmen der folgenden Ansprüche auf verschiedene Weisen ausgeführt und gebraucht werden kann.

## Patentansprüche

1. Gurtsystem für Gefechtszwecke, aus
einem Helmgurt (**3**),
mehreren Körpergurten (**2**) und
einer zentralen Kontrolleinheit (**1**),
- wobei jeder der Helm- (**3**) bzw. Körpergurten (**2**)
- Laserdetektoren (**5**),
- eine eigene Kontroll- und Steuereinheit (**6, 7**) sowie
- ein Ultraschall - Übertragungssystem (**26**) mit Sender und Empfänger aufweist,
- wobei diese Sender und Empfänger zum Datenaustausch
- untereinander zwischen den, den Helmgurt (**3**) und die Körpergurten (**2**) umfassenden, einzelnen Gurten sowie
- mit der zentralen Kontroll- und Steuereinheit (**1**) ausgebildet sind,
- wobei die Datenübertragung jeweils durch Ultraschall erfolgt, und
- wobei die zentrale Kontrolleinheit (**1**) eine Funkverbindung (**32**) mit einer externen Führungszentrale aufweist, über welche Funkverbindung zum Beispiel eine Datenrückmeldung über detektierte Laserstrahlen und Befehle ausgetauscht werden.

2. Gurtsystem nach Anspruch 1,
**dadurch gekennzeichnet**,
dass die Körpergurten (**2**) mindestens einen Armgurt (**2**) umfassen, welcher ein Gurtteil (**16**) und Mittel (**17**) zur Schliessung des Armgurts (**2**) um einen menschlichen Arm eines Trägers des Gurtsystems beinhaltet.

3. Gurtsystem nach Anspruch **1**,
**dadurch gekennzeichnet,**
- dass der Helmgurt (**3**) und die Körpergurten (**2**) gesteuerte Einheiten sind, und
- dass die Kontrolleinheit (**1**) eine steuernde Einheit ist und
- einen Speicher (**30**) zur Speicherung eines Gurtsystem-Identifikationscodes (**ID**) und
- einen Kontrollschaltkreis (**25**) zur Aussendung des Gurtsystem-Identifikationscodes (ID) zu den gesteuerten Einheiten (**2, 3**) mittels Datensignale aufweist.

4. Gurtsystem nach Anspruch **3**,
**dadurch gekennzeichnet,**
dass jede der gesteuerten Einheiten (**2, 3**)
- eine Speichereinheit (**30**) zur Speicherung des Gurtsystem-Identifikationscodes (**ID**) von der Kontrolleinheit (**1**) sowie
- einen Kontrollschaltkreis (**25**) zum Vergleich einlaufender Botschaften mit dem, in der Speichereinheit (**30**) abgelegten, Gurtsystem-Identifikationscode (**ID**) aufweist.

5. Gurtsystem nach Anspruch **1**,
**dadurch gekennzeichnet,**
dass eine Vielzahl der den Helmgurt (**3**), die Körpergurten (**2**), den Helmgurt-Kontrollschaltkreis (**6**) und die Körpergurt-Kontrollschaltkreise (**7**) umfassenden Komponenten einen Display (**14**) zum Anzeigen von Daten aufweist.

6. Gurtsystem nach Anspruch **5**,
**dadurch gekennzeichnet,**
dass mindestens ein Teil der angezeigten Daten auf mindestens zwei der Displays (**14**) gleichzeitig angezeigt wird.

7. Gurtsystem nach Anspruch **1,**
**dadurch gekennzeichnet,**
dass mindestens ein Teil der den Heimgurt (**3**), die Körpergurten (**2**), den Helmgurt-Kontrollschaltkreis (6) und die Körpergurt-Kontrollschaltkreise (**7**) umfassenden Komponenten Mittel zur Detektion der Entfernung mindestens eines Teils des entsprechenden Helmgurtes (**3**) bzw. Körpergurtes (**2**) vom menschlichen Körper des Trägers des Gurtsystems beinhaltet.

8. Gurtsystem nach Anspruch **1**, mit einer Vielzahl von Riemen zur Befestigung besagter Komponenten an einem Träger,
**dadurch gekennzeichnet,**
dass die Riemen zur Anbringung der Körpergurten (**2**) um die Extremitäten, nicht aber um den Rumpf des Trägers des Gurtsystems vorgesehen sind.

9. Verwendung des Gurtsystems nach Anspruch **1**,
**dadurch gekennzeichnet,**
dass es mit weiteren, kompatiblen Gurtsystemen ein Gefechtssimulations-System bildet.

10. Verwendung nach Anspruch **9**,
**dadurch gekennzeichnet,**
dass das Gefechtssimulations-System weitere stationäre Ultraschall-Empfänger zur Kommunikation mit den Gurtsystemen für Gefechtszwecke beinhaltet.

11. Verfahren zum Betrieb des Gurtsystems nach den Ansprüchen **1** bis **8**,
**dadurch gekennzeichnet,**
dass dieses Verfahren die Aussendung eines Ultraschall-Datensignals durch mindestens eine erste der die Kontrolleinheit (**1**), die Körpergurten (**2**) und den Helmgurt (**3**) umfassenden Einheiten des Gurtsystems sowie den Empfang des Ultraschall-Datensignals durch mindestens eine zweite der genannten Einheiten (**1, 2, 3**) des Gurtsystems beinhaltet

12. Verfahren nach Anspruch **11**,
**dadurch gekennzeichnet,**
dass zusätzlich in einem Verfahrensschritt der entsprechenden Einheiten (**1, 2, 3**) ein gemeinsamer Gurtsystem-Identifikationscode (**ID**) zugeordnet wird.

13. Verfahren nach Anspruch **11**,
**dadurch gekennzeichnet,**
- dass die Kontrolleinheit (**1**) den Helmgurt (**3**) und die Körpergurten (**2**) steuert , und
- dass in entsprechenden Verfahrensschritten ein gemeinsamer Gurtsystem-ldentifikationscode (**ID**) von der Kontrolleinheit (**1**) zum Helmgurt (**3**) und zu den Körpergurten (**2**) übermittelt wird.

14. Verfahren nach Anspruch **13**,
**dadurch gekennzeichnet,**
dass der Gurtsystem-Identifikationscode (ID) periodisch von der Kontrolleinheit (1) übermittelt wird.

15. Verfahren nach Anspruch **14,**
**dadurch gekennzeichnet,**
dass mindestens eine der gesteuerten Einheiten (**2, 3**) im Falle des Nichtempfangs des gemeinsamen Gurtsystem-Indentifikationscodes innerhalb eines gegebenen Zeitintervalls den nächsten empfangenen Identifikationscode als gemeinsamen Gurtsystem-Identifikationscode speichert.

## Claims

1. Harness system for combat purposes, comprising
a helmet harness (3),
a plurality of body harnesses (2) and
a central control unit (1),
- wherein each of the helmet and body harnesses (3, 2) has
- laser detectors (5),
- its own monitoring and control unit (6, 7) and
- an ultrasonic transmission system (26) with transmitter and receiver,
- wherein said transmitters and receivers are adapted for exchanging data
- with each other, between individual harnesses comprising helmet harness (3) and body harnesses (2) and
- with the central monitoring and control unit (1),
- wherein transmission of data is in each case by ultrasound, and
- wherein the central control unit (1) has a radio link (32) with an external command centre, such radio link being used for example for acknowledging detected laser beams and receiving commands.

2. Harness system according to Claim 1,
characterized in that
the body harnesses (2) comprise at least one arm harness (2) including a strap piece (16) and means (17) for fastening the arm harness (2) around the wearer's arm.

3. Harness system according to Claim 1,
characterized in that
- the helmet harness (3) and the body harnesses (2) are controlled units, and
- the control unit (1) is a controlling unit, and has
- a memory (30) for storing a harness system identity code (ID) and
- a control circuit (25) for transmitting the harness system identity code (ID) to the controlled units (2, 3) by means of data signals.

4. Harness system according to Claim 3,
characterized in that
each of the controlled units (2, 3) has
- a memory unit (30) for storing the harness system identity code (ID) of the control unit (1) and
- a control circuit (25) for comparing incoming messages with the harness system identity code (ID) filed in the memory unit (30).

5. Harness system according to Claim 1,
characterized in that
a number of the components comprising the helmet harness (3), body harnesses (2), helmet harness control circuit (6) and body harness control circuits (7) have a display (14) for the display of data.

6. Harness system according to Claim 5,
characterized in that
at least some of the displayed data are displayed simultaneously on at least two of the displays (14).

7. Harness system according to Claim 1,
characterized in that
at least a part of the components comprising the helmet harness (3), body harnesses (2), helmet harness control circuit (6) and body harness control circuits (7) contains means for detecting the removal of at least a part of the corresponding helmet harness (3) and/or body harness (2) from the harness system wearer's body.

8. Harness system according to Claim 1, with a plurality of straps for attaching said components to a wearer,
characterized in that
the straps for attaching the body harnesses (2) are provided around the extremities, but not around the torso, of the wearer.

9. Use of the harness system according to Claim 1,
characterized in that
it forms, with other compatible harness systems, a combat simulation system.

10. Use according to Claim 9,
characterized in that
the combat simulation system includes further fixed ultrasonic receivers for communicating with the harness systems for combat purposes.

11. Method for operation of the harness system according to Claims 1 to 8,
characterized in that
this method includes the transmission of an ultrasonic data signal by at least a first of the units of the harness system comprising the control unit (1), body harnesses (2) and helmet harness (3), and the reception of the ultrasonic data signal by at least a second of the said units (1, 2, 3) of the harness system.

12. Method according to Claim 11,
characterized in that
additionally, in a method step, a common harness system identity code (ID) is assigned to the corresponding units (1, 2, 3).

13. Method according to Claim 11,
characterized in that
- the control unit (1) controls the helmet harness (3) and the body harnesses (2), and
- in corresponding method steps, a common harness system identity code (ID) is transmitted by the control unit (1) to the helmet harness (3) and to the body harnesses (2).

14. Method according to Claim 13,
characterized in that
the harness system identity code (ID) is transmitted periodically by the control unit (1).

15. Method according to Claim 14,
characterized in that
in the event of the common harness system identity code's not being received within a given time interval, at least one of the controlled units (2, 3) stores the next identity code received as the common harness system identity code.

## Revendications

1. Système de harnais destiné au combat, composé
d'une sangle pour casque (**3**),
de plusieurs sangles pour le corps (**2**) et
d'une unité centrale de contrôle (**1**),
- chacune des sangles pour le casque (**3**) ou pour le corps (**2**) possédant
- des capteurs à laser (**5**),
- sa propre unité de contrôle et de commande (**6,7**) ainsi que
- un système de transmission par ultrasons (**26**) muni d'un émetteur et d'un récepteur,
- ces émetteurs et ces récepteurs étant conçus pour échanger des données
- de façon réciproque entre les différents éléments du harnais, ce qui comprend la sangle pour le casque (**3**) et les sangles pour le corps (**2**), et
- avec l'unité centrale de contrôle et de commande (**1**),
- la transmission des données se faisant respectivement par ultrasons, et
- l'unité centrale de contrôle (**1**) possédant une liaison radio (**32**) avec un poste de commandement externe, par laquelle sont par exemple échangés un rétrosignal prévenant de la détection de rayons laser, ainsi que des ordres.

2. Système de harnais suivant la revendication **1**,
**caractérisé en ce que**
les sangles pour le corps (**2**) comprennent au moins une sangle pour bras (**2**), comprenant elle-même un élément de sangle (**16**) et des moyens (**17**) pour fermer la sangle pour bras (**2**) autour du bras de la personne portant le système de harnais.

3. Système de harnais suivant la revendication **1**,
**caractérisé en ce que**
- la sangle pour casque (**3**) et les sangles corporelles (**2**) sont des unités commandées, et
- que l'unité de contrôle **(1)** est une unité de commande et
- comporte une mémoire (**30**) destinée au stockage d'un code d'identification du système de harnais,
- ainsi qu'un circuit de commande (**25**) destiné à l'émission du code d'identification du système de harnais aux unités commandées (**2,3**) à l'aide de signaux de données.

4. Système de harnais suivant la revendication **3**,
**caractérisé en ce que**
chacune des unités commandées **(2,3)**
- comporte une mémoire (**30**) destinée au stockage du code d'identification du système de harnais par l'unité de contrôle (**1**)
- ainsi qu'un circuit de commande (**25**) destiné à comparer les messages entrants avec le code d'identification du système de harnais enregistré dans la mémoire (**30**).

5. Système de harnais suivant la revendication **1**,
c**aractérisé en ce que**
un grand nombre de composants, comprenant la sangle pour casque (**3**), les sangles corporelles (**2**), le circuit de commande de la sangle pour casque (**6**) et les circuits de commande des sangles corporelles (**7**), comporte un afficheur (**14**) destiné à afficher les données.

6. Système de harnais suivant la revendication **5**,
caractérisé en ce que
au moins une partie des données affichées le sont sur au moins deux des afficheurs (14) en même temps.

7. Système de harnais suivant la revendication **1**,
**caractérisé en ce que**
au moins une partie des composants, comprenant la sangle pour casque (**3**), les sangles corporelles (**2**), le circuit de commande de la sangle pour casque (**6**) et les circuits de commande des sangles corporelles (**7**), comprend des moyens pour mesurer la distance entre au moins une partie de la sangle pour casque (**3**) ou de la sangle corporelle (**2**) correspondante et le corps de la personne portant le système de harnais.

8. Système de harnais suivant la revendication **1** comprenant de nombreuses attaches de fixation desdits composants sur la personne portant le système,
**caractérisé en ce que**
les attaches sont prévues pour placer les sangles corporelles (**2**) autour des extrémités et non pas autour du buste de la personne portant le système de harnais.

9. Utilisation du système de harnais suivant la revendication **1**,
**caractérisée en ce que**
il forme, avec d'autres systèmes de harnais compatibles, un système de simulation de combat.

10. Utilisation suivant la revendication **9**
**caractérisée en ce que**
le système de simulation de combat comprend d'autres récepteurs fixes à ultrasons servant à communiquer avec les systèmes de harnais destinés au combat.

11. Procédé du système de harnais suivant les revendications **1** à **8**,
**caractérisé en ce que**
ce procédé consiste en l'émission d'un signal de données par ultrasons à l'aide d'au moins une première unité parmi les unités du système de harnais, comprenant l'unité de contrôle (**1**), les sangles corporelles (**2**) et la sangle pour casque (**3**), ainsi qu'en la réception du signal de données ultrasonore à l'aide d'au moins une deuxième unité parmi les unités susmentionnées (**1,2,3**) du système de harnais.

12. Procédé selon la revendication **11,**
**caractérisé en ce que**
il est en outre attribué, lors d'une étape de fonctionnement des unités correspondantes (**1,2,3**), un code commun d'identification du système de harnais.

13. Procédé suivant la revendication **11**,
**caractérisé en ce que**
- l'unité de contrôle (**1**) commande la sangle pour casque (**3**) et les sangles corporelles (**2**), et
- que, lors d'étapes de fonctionnement appropriées, un code commun d'identification du système de harnais est transmis, à partir de l'unité de contrôle (**1**), à la sangle pour casque (**3**) et aux sangles corporelles (**2**).

14. Procédé suivant la revendication **13**,
**caractérisé en ce que**
le code d'identification du système de harnais est régulièrement transmis par l'unité de contrôle (**1**).

15. Procédé suivant la revendication 14,
**caractérisé en ce que**
au moins l'une des unités commandées (**2,3**) mémorise, si le code commun d'identification du système de harnais n'est pas reçu au bout d'un laps de temps donné, le code d'identification le plus proche qu'elle aura reçu, en tant que code commun d'identification du système.
